# EUROPEAN PATENT SPECIFICATION

(11) **EP 4 400 463 B1**
(45) Date of publication and mention of the grant of the patent: **23.07.2025**
(21) Application number: 23151536.2
(22) Date of filing: 13.01.2023
(51) Int. Cl.: B65H 51/10, B60L 53/14, B65H 75/36, H02G 11/00, B63J 3/04

(54) **A CABLE FEEDING UNIT FOR A SHORE CABLE MANAGEMENT SYSTEM**
KABELZUFÜHRUNGSEINHEIT FÜR EIN KÜSTENKABELVERWALTUNGSSYSTEM
UNITÉ D'ALIMENTATION DE CÂBLE POUR SYSTÈME DE GESTION DE CÂBLE DE TERRE

(43) Date of publication of application: 17.07.2024
(73) Proprietor: Scaleup OÜ, 10115 Tallinn (EE)
(72) Inventor: Jõgi, Alar, 76403 Alliku (EE); Vinni, Mehis, 71302 Põhja-Sakala parish (EE)
(74) Representative: Moosedog Oy

(56) References cited:
- WO-A1-2023/274453
- CN-A- 111 776 887
- CN-A- 112 093 597

## Description

### TECHNICAL FIELD

The present disclosure relates generally to shore connection systems to transfer electrical or signal cables to the vessels, more specifically to a cable feeding unit for a cable management systems.

### BACKGROUND

To provide electrical and signal cables to the ships, ferries and other vessels, a cable management system is typically used. The known cable management systems enable to transfer multiple power and signal cables to a vessel's power connection cabinet only all cables together, that is, all cables are reeled in together. Typically, at least one cable is needed to be reeled inside to the vessel.

For example, a patent document CN111776887A describes a shore power cable transmission device for charging ships at dock that minimizes cable wear and extends the cable's lifespan. The device has a rotatable frame on a base, a reel on the frame, a cable transfer box on the base, a cable guide mechanism between the box and reel, a rotatable bearing platform on the base with a cable-mounted load-bearing component. The cable guide mechanism, which has a bearing platform for cable installation that rotates in sync with the cable helps to prevent cable damage due to friction or twisting during rotation.

Another example, CN112093597A, describes a ship shore power system, specifically a device for lifting and conveying harbor shore power cables. The device includes a movable trolley equipped with a cable drum unit, a telescopic arm unit, and a cable conveying unit. The telescopic arm unit consists of vertical and horizontal mechanisms, while the cable conveying unit features a first and a second cable conveying mechanism. These mechanisms are positioned at the left and right ends of the horizontal telescopic arm, respectively. Each cable conveying mechanism contains an electric roller, a pressing wheel situated above this roller, and a roller motor that drives the roller. The electric rollers are connected to the roller motors. This harbor shore power cable lifting and conveying device ensures efficient and safe cable conveyance.

The cables to be reeled into the vessel are heavy and feeding the cables altogether is difficult. Each plug of the power cables may weigh up to twenty-five kilograms, and each power cable may weigh four to twenty kilograms per meter depending upon power demand and particular situation. The cable length to be reeled inside the vessel and reeled out from the vessel may be up to twenty meters. Harsh weather conditions, such as rain, snow, ice further increase the weight of cables to be transferred to the vessel even more. Vessel movements, tidal ranges make reeling in and reeling out the cables even more complicated.

Due to the heavy weight of the cables, feeding the cables to the vessel is thus very complicated to the crew and this makes supplying cables to the vessel difficult. Moreover, once the cables are transferred and lifted up to the hatch of the vessel, a crew member in the vessel has to pull all the heavy cables through the hatch of the vessel to the power connection cabinet all together. I.e., the known solutions don't enable to reel the power cables into the vessel one by one or together at the same time. Due to the heavy weight of the power cables, multiple crew members may be needed to be able to pull the cables into the vessel. Furthermore, typically, the vessels can stop at the port only for a limited time. Thus, when the vessel arrives at the port, it may be very critical to connect the power cables to the power connection cabinet of the vessel as quickly as possible to use the time the vessel stays at the port for power transfer as efficiently as possible. Connecting heavy power cables may take a long time and thus, the vessel may lose valuable time.

The cables to be fed into the cable connection cabinet of the vessel may include multiple supply power cables, neutral cable and data communication cables. Different vessels such as, container vessels, cruise ships and the like may have one or more hatches for a shore power room in different locations (e.g., the hatches may be located at the stern, bow or at the side of the hull) and need a different set of cables. Therefore, a solution is required to enable the crew members to connect the power cables and data communication cables according to the vessel's need and situation one by one or all together.

Therefore, in the light of the foregoing discussion, there is a need to overcome the aforementioned shortcomings of known shore cable supply systems of ships arriving at ports.

### SUMMARY

The aim of the present disclosure is to provide a system that would enable to feed two or more shore cables to a vessel one by one or all cables together. The aim of the disclosure is achieved by a cable feeding unit for a shore cable management system as defined in the appended independent claims to which reference is made to. Advantageous features are set out in the appended dependent claims.

Additional advantages of the cable feeding unit according to the present disclosure are that the cable feeding unit provides a safe, fast and reliable way to connect vessels to shore power.

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

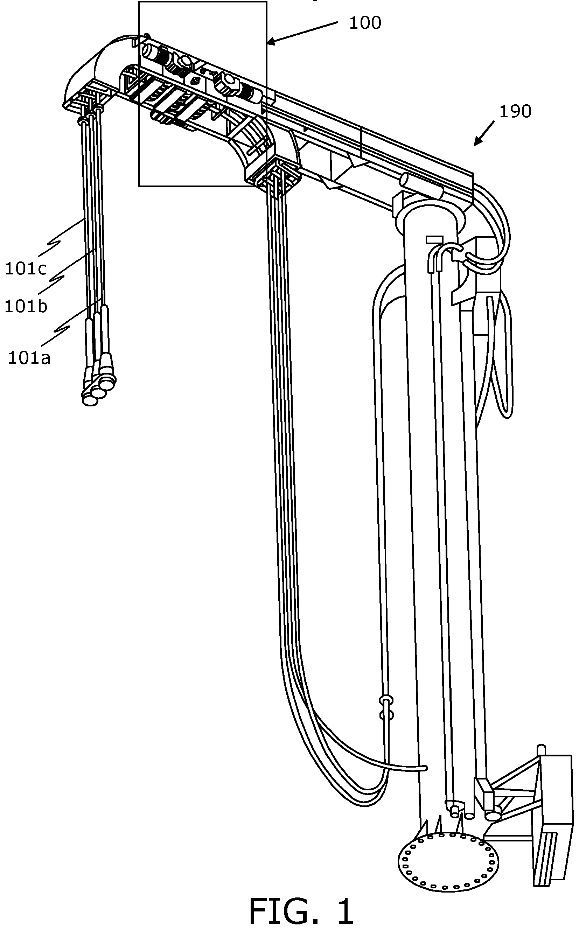

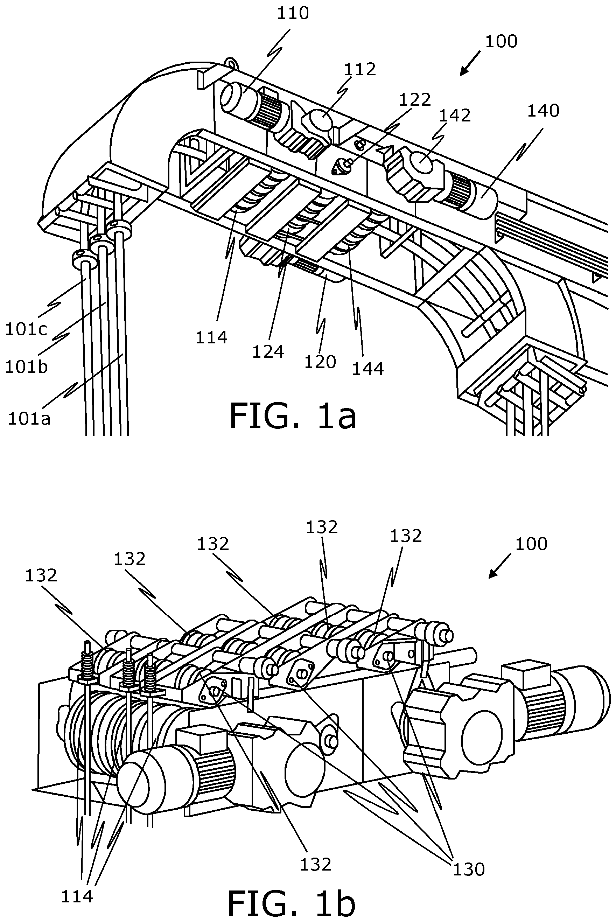

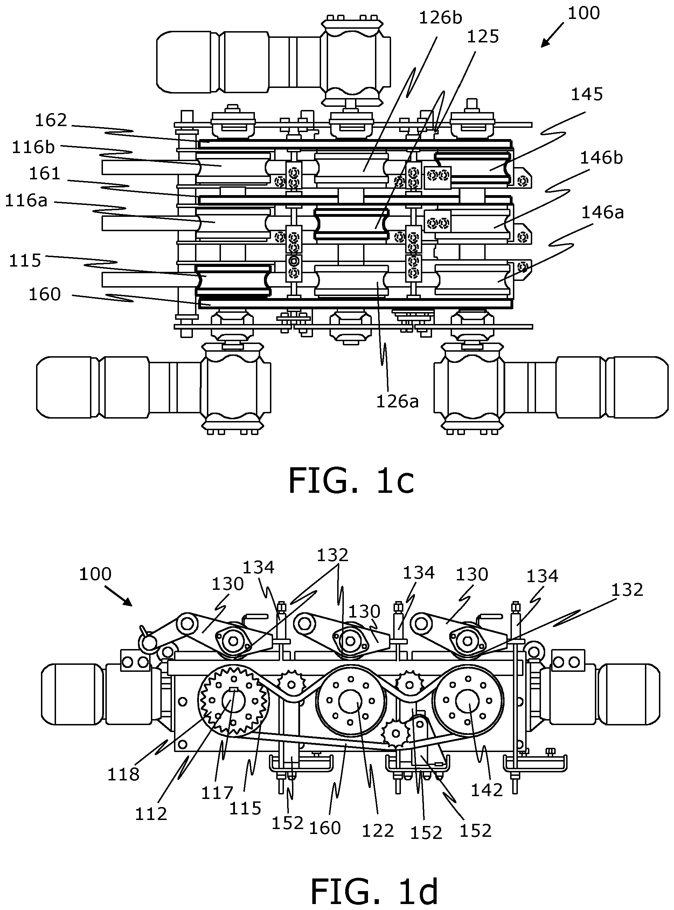

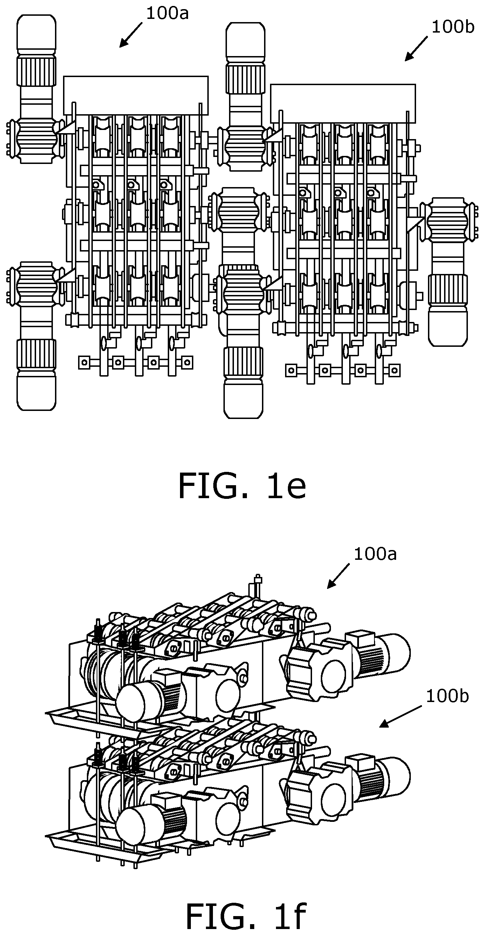

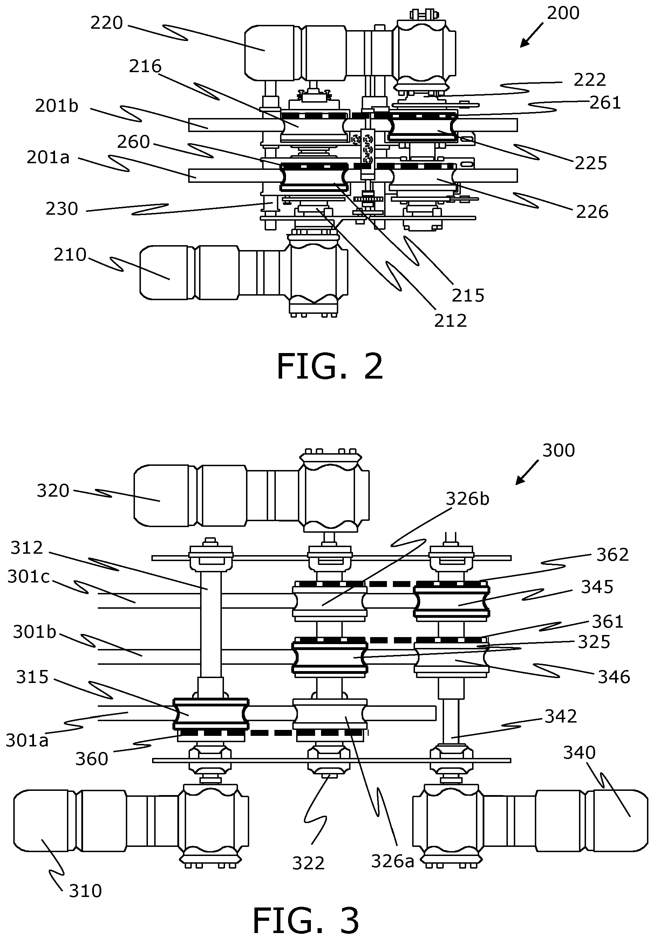

The summary above, as well as the following detailed description of illustrative embodiments, is better understood when read in conjunction with the appended drawings. For the purpose of illustrating the present disclosure, exemplary constructions of the embodiments of the disclosure are shown in the drawings, with references to the following diagrams wherein:
Figure FIG. 1 shows an embodiment of a cable feeding unit according to the present disclosure installed to a shore cable management system;
Figure FIG. 1a shows an enlarged view of the cable feeding unit of the shore cable management system as shown figure FIG. 1;
Figure FIG. 1b shows a perspective view of the embodiment of the cable feeding unit shown in figures FIG. 1 and FIG. 1a;
Figure FIG. 1c shows a bottom view of the embodiment of the cable feeding unit shown in figures FIG. 1 and FIG. 1a;
Figure FIG. 1d shows a side view of the embodiment of the cable feeding unit shown in figures FIG. 1 and FIG. 1a;
Figure FIG. 1e shows a schematic illustration of the two cable feeding units shown in figure FIG. 1b, which can be used side by side in the shore cable management system;
Figure FIG. 1f shows a schematic illustration of the two cable feeding units shown in figure FIG. 1b, which can be used on top of each other in the shore cable management system;
Figure FIG. 2 shows a bottom view of an alternative embodiment of the cable feeding unit according to the present disclosure;
Figure FIG. 3 shows a bottom view of an alternative embodiment of the cable feeding unit according to the present disclosure.

### DETAILED DESCRIPTION OF EMBODIMENTS

The following detailed description illustrates embodiments of the present disclosure and ways in which they can be implemented.

The present disclosure relates to a cable feeding unit for a shore cable management system for transferring cables to an electrical connection or data communication connection in a vessel. Herein, the vessel may be a ship, a boat, a cruise ship, a yacht, a container vessel, a floating platform, an airplane and the like, that may float. The electrical connection may be sockets, plug points, hatch and the like that may be provided on the vessel.

In an aspect, an embodiment of the present disclosure provides a cable feeding unit for a shore cable management system, wherein the cable feeding unit comprises a first motor, a first shaft, and a first set of rollers; a second motor, a second shaft, and a second set of rollers, wherein an axis of the second shaft is in parallel with an axis of the first shaft; a cable feeding passage formed of a set of cable tensioners having cable tensioning rollers placed opposite to the first set of rollers and the second set of rollers so that rim parts of the cable tensioning rollers facing rim parts of the rollers of the first set of rollers and the rollers of the second set of rollers, wherein the first motor is connected with the first shaft, the first set of rollers is arranged on the first shaft and the first motor is adapted to drive by the first shaft one or more rollers of the first set of rollers; the second motor is connected with the second shaft, the second set of rollers is arranged on the second shaft and the second motor is adapted to drive one or more rollers of the second set of rollers; at least one roller of the first set of rollers is connected by a first transmission means with a roller of the at least second set of rollers.

The cable feeding unit according to the embodiments of the present disclosure may be employed in several port devices, e.g., cable feeding unit may be mountable to a cable handler boom or telescope or a cable handler head of the shore cable management system (CMS) located at ports on quay to enable shore cables (such as power cables and signal cables) to be feed to the vessel one by one or together. The cable feeding unit may be attached to a portable or non-portable CMS. The cable feeding unit may be located inside the boom or cable handler head of the CMS and covered with weather protection covers. The cable feeding unit is used for moving cables from shore to the vessel where a crew member takes the plug of the cable, pulls it into the vessel and inserts the plug into a socket of a connection cabinet on the vessel.

Inside the cable feeding unit there is at least one driving roller running on the shaft for each cable to be reeled. In addition to the driving roller on the shaft, in different embodiments there may be one or more freely rotatable rollers attached on the shaft. In such embodiments the driving roller on one shaft is connected by transmission means with one or more freely rotatable rollers on one or more shafts. To reel the cable, the motor is actuated to rotate the shafts having driving rollers and the cable to be reeled is forced with tensioning rollers of the cable tensioner against at least drive wheels. Tensioning force can be regulated manually or automatically. A distance between two shafts may be 150-600 mm. A distance between rollers may be 10 or more mm.

According to the present disclosure, the combination of rollers with cable tensioners arranged on two or more shafts, wherein each shaft has connected to its own motor enables to achieve safe and good friction to move cables up and down, i.e., to reel the cables in the vessel and reel the cables out the vessel and to reduce the dimensions and weight of the cable feeding unit, which enables more efficient and safe operating in the ports. As the cable feeding unit according to the present disclosure doesn't need middle walls between the rollers the present cable feeding unit is also easier to manufacture and maintain. Additionally, the cable feeding unit according to the present disclosure enables to replace the cables faster.

The cable feeding unit is used in the shore CMS for transferring the one or more power cables all together or independently one by one to the electrical connection of the vessel or to the power banks of the vessels when the vessel is at the port for supplying the vessel with electricity. The one or more cables may be connected from an electrical station on a shore power room through the hatch of the vessel to the electrical connection of the vessel one by one or together, wherein the vessel may move during electrical connection and during power transfer. The cable feeding unit enables to provide the one or more cables at a side, stern or bow of the vessel. Optionally, the CMS may be driven by a truck to the suitable location on the quay or can be a self-driving or remotely controllable vehicle to move the cable reel into suitable location.

The cable feeding unit enables to provide the one or more cables one by one in such a way that when the one or more cables are transferred to the electrical connection cabinet of the vessel, the cable feeding unit supports the cables so that the entire weight of the cable may not be pulled into the vessel by crew members. That is, the crew member is able to reel and pull the cables through the hatch into the vessel one by one more efficiently. More specifically, two or more cables can be reeled in and reeled out independently of each other. Thus, the embodiments according to the present disclosure provide a safe, fast and reliable way to connect the power connection cabinet of the vessel to shore power connection cabinet or electrical station on the shore.

Compact construction of the cable feeding unit enables to operate on the quay in the locations with limited space, thus, the risk to damage to other port equipment is reduced and does not limit operating of other devices and machines. Compact construction of the cable feeding unit thus enables the CMS to be installed to a ramp, platform on the shore, to a vessel's ramp or to the quay.

The cable feeding unit according to the embodiments of the present disclosure can be used for transferring cables close to the hatch of a vessel in situations where different vessels are visiting port. Thus, the cable feeding unit according to the embodiments of the present disclosure enables to solve the problem wherein different cable management systems are needed for different types of vessels. This, in turn enables to save operating space and power supply time in the ports.

Quite often different vessels have hatches in different locations and therefore, mobile solution is required that may be provided by the cable feeding unit and the CMS of the present disclosure. The cable feeding unit of the present disclosure may be used for lifting cables close to the electrical connection such as, shore power hatch on the vessel in situations where different vessels are visiting port.

In some embodiments, the cable feeding unit further comprises one or more additional motors, one or more additional shafts, and one or more sets of additional rollers, wherein the one or more additional motors is connected with the one or more additional shafts, the one or more sets of additional rollers are arranged on the one or more additional shafts, wherein axes of the one or more additional shafts are in parallel with the axis of the first shaft and axis of the second shaft.

The first set of rollers, second set of rollers and one or more additional sets of rollers, depending on the embodiments of the present cable feeding unit, may comprise: one or more driving rollers; or one or more driving rollers and one or more freely rotatable rollers; or one or more freely rotatable rollers.

A freely rotatable roller is mounted on a shaft in a way that allows it to rotate freely. This means that the freely rotatable roller is not connected to a motor and is adapted to rotate in response to external forces, i.e., such as the movement of the cable to be reeled into the vessel or out from the vessel. The freely rotatable roller provides support and guidance for the cable moving along a cable feeding passage. The freely rotatable rollers thus help to support the cables to be reeled.

According to the embodiments, the driving roller of one set of rollers is connected to a freely rotatable roller of one or more other set of rollers by a transmission means. The transmission means may be tensioned.

To reel the cable, the cable feeding unit needs the cable feeding passage, which is formed between the rim parts of the cable tensioning rollers and the rim parts of the rollers of each set of rollers by facing the rim parts of the cable tensioning rollers and the rim parts of the rollers of the first set of rollers, the rim parts of the rollers of the second set of rollers, and optionally the rim parts of the rollers of the one or more additional sets of rollers to one another. By rim it is meant the surface of the roller on which the belt or chain runs.

The first motor, the second motor and optionally one or more additional motors may be electrical motor, servo motor or hydraulic motor. The motors may be remote controlled by an operator. If the motor is actuated by the operator, the motor starts rotating the shaft which in turn rotates the driving roller and starts moving the transmission means to reel the cable in the vessel or out the vessel. The two or more motors of the cable feeding unit may be actuated separately or together, thus enabling to reel the cables separately or together. The two or more motors may be configured to reel the cables at same speed or at different speeds depending on the weight of the cable, on the length of the cable, on the weather conditions, on the changes of the load.

Different vessels may have hatches for different cables in different locations and therefore the length of the cables to be reeled into the vessel may be different. Thus, the motors can be adjusted to reel the cables at different speeds to enable to reel in and out all the cables during the same time.

The motor is configured to rotate the shaft. The rotating shaft is arranged to rotate the at least one driving roller. According to the embodiments, a driving roller is mounted on a shaft connected to a motor in such a way that when the shaft rotates, the driving roller also rotates and enables to move the transmission means.

To reel the cable, the motor is actuated, the shaft connected to the motor starts rotating and rotates the driving roller mounted on the shaft, the driving roller is rotated by the shaft so that the transmission means move and the cable supported on the transmission means can be reeled.

Optionally, the cable feeding unit comprises a cable adjustment means. The cable adjustment means may be e.g., an adjustable brake on the motor, limited slip differential, overload differential, monitoring the vessel with sensors and reeling the cables according to sensor information. For accidental pull of cables motors may have brake release which is set so the cable could be pulled through the CMS freely not damaging the CMS.

Optionally, the cable feeding unit according to any of the preceding claim, wherein the cable tensioning rollers comprise constant pressure means. The constant pressure means are adapted to maintain a constant pressure on the cable. The constant pressure means may be springs. In such an example the tensioning rollers are mounted with springs so the tension is constantly hold on the cable when the diameter of the cable changes to smaller or bigger.

The diameter of the cable may be different in each rollers line of the cable feeding unit (i.e., when a roller of first set of rollers running on the first shaft is connected, by circumferentially elongated element, to the roller of the second set of rollers running on the second shaft and optionally to the roller of one or more additional sets of rollers running on the additional shafts, the roller on the first shaft, the roller on the second shaft and optional roller on the one or more additional shafts which all rotate together, form a roller line). The diameter of the cable itself typically varies +/- 2mm along the length of the cable. In addition, the constant pressure means enable to reel at the same time two or more cables having different diameters. The diameter of different cables may vary from 15-20 mm up to 85-100mm. In an example of reeling three cables at the same time the diameters of the cables can be e.g., 50 mm, 60 mm, 70 mm.

Cable tensioning is required also in different climate conditions. E.g., low and high temperature, rain, ice affect the material behaviour and it can affect the force of pulling the cable. Cable maximum pulling force is 10 kN. For design and calculations, 1,5 times factor is included.

The axis of the first shaft, the axis of the second shaft and the axes of the one or more additional shafts are on the same plane or on the different planes. The arrangement of the axes depends on the specific situations in the ports, e.g., how the CMS can be installed on the quay, which kind of vessels need servicing, what type of cables need to be reeled.

Having the axes of the shafts on the same plane simplifies the design and construction of the cable feeding unit as it is easier to align and connect components when the axes are on the same plane. The location of the axes of the shafts also affects the load-carrying capacity and stability of the cable feeding unit, as well as the efficiency and power transmission of the shafts. For example, if the axes of the shafts are on the same plane and the shafts are connected to each other, the load-carrying capacity of the cable feeding unit can be increased, as the forces acting on the shafts will be distributed evenly across all of the shafts. This can help to reduce the risk of one shaft failing due to excessive loading. This embodiment may be more preferred for reeling heavier cables. Having the axes of the shafts on the same plane further helps to increase the stability of the cable feeding unit, as the shafts will be better aligned and less prone to misalignment. This can help to reduce the risk of the cable feeding unit becoming unstable or failing due to excessive loads or forces. The location of the axes of the shafts may also affect the efficiency and power transmission of the shafts. If the axes of the shafts are on the same plane, it is easier to align and connect the shafts, which can help to increase the efficiency of the cable feeding unit.

Having the axes of the shafts on different planes allows for greater flexibility and versatility of the cable feeding unit in cases wherein more shafts are needed for reeling more different cables as such arrangement of the axes enable the shafts to rotate at different angles. This arrangement of shafts may be beneficial when multiple vessels require cables at the same time. If the axes of the shafts are on different planes, the forces acting on the shafts can be more evenly distributed, which helps to reduce the risk of one shaft failing due to excessive loading. If the axes of the shafts are on different planes and the shafts are connected in such a way that they support each other, the cable feeding unit is more stable and less prone to misalignment. This helps to reduce the risk of the cable feeding unit becoming unstable or failing due to excessive loads or forces. Having the axes of the shafts on different planes allows also for more efficient power transmission between the shafts, which is especially useful in the embodiments of the cable feeding unit where high levels of torque or power need to be transmitted over long distances.

According to the embodiments of the present disclosure, the first set of rollers comprises a first driving roller, or a first driving roller and one or more first freely rotatable rollers, wherein the first driving roller is connected to the first shaft by a first torque transmission joint. The second set of rollers comprises one or more second driving rollers and one or more second freely rotatable rollers, wherein the second driving roller is connected to the second shaft by a second torque transmission joint. The one or more sets of additional rollers comprises one or more additional driving rollers and one or more additional freely rotatable rollers, wherein the one or more additional driving rollers are connected to the one or more additional shafts by a one or more additional torque transmission joints. The first torque transmission joint, the second torque transmission joint and the one or more additional torque transmission joints are selected from the group comprising a key connection, a shaft collar connection, a locknut, a clamping bush, a shrink disc, a taper bush, and a tooth joint. The key connection, the shaft collar, the clamping bush, the shrink disc, the taper bush or the tooth joint may be used to transmit torque and rotation between shafts and driving rollers to transmit torque between the shaft and driving rollers and to enable the driving rollers to rotate.

The key connection comprises a key made of metal fitted tightly into a keyway in both the shaft and the driving roller to lock the shaft and driving roller together radially. The key prevents the driving roller from slipping relative to the shaft, allowing the two parts to transmit torque to each other. The key connection is typically preferred because it is easy to assemble and disassemble. This is beneficial when the rollers need to be replaced or maintained. The rollers experience wear over time due to the constant friction and pressure applied to them. This can result in the rollers becoming damaged or worn, which may necessitate their replacement. The rollers need to be removed from the shaft from time to time for maintenance purposes, such as cleaning or lubrication. This can help to extend the lifespan of the rollers and ensure that they are operating efficiently. Easy disassembling and assembling the rollers is also beneficial if a cable becomes damaged while being reeled, it may be necessary to remove the rollers from the shaft in order to repair or replace the cable. In some embodiments, if the cable feeding unit is used to reel multiple types of cables, it is necessary to switch between different cables on a regular basis. In order to change the cables, this may require the removal of the rollers from the shaft and replacing the rollers to the different size of rollers depending on the diameter of cables for example.

Furthermore, the key connection is able to transmit relatively high levels of torque.

Alternatively, a locknut, a shaft collar, a clamping bush, a shrink disc, a taper bush or a tooth joint type of connections may be used. The shaft collar works by clamping onto the shaft, using a set of screws or other fasteners. The shaft collar provides a secure connection between the shaft and driving rollers, allowing the two parts to transmit torque to each other. The clamping bush works by clamping onto the shaft, using a set of screws or other fasteners. The clamping bush provides a secure connection between the shaft and the driving roller, allowing the shaft to transmit torque to the driving roller. The shrink disc works by clamping onto the shaft, using a set of screws or other fasteners. The disc is designed to shrink when heated, creating a tight and secure connection between the shaft and the hub. The taper bush works by using a tapered interface to transmit torque between the shaft and the driving roller. The taper allows the bush to be easily installed and removed from the shaft, while still providing a secure and reliable connection. The tooth joint works by using a series of teeth on the shaft and the hub to transmit torque between the two parts. The tooth joint, creating a secure and reliable connection that can transmit high levels of torque.

The first transmission means, the second transmission means, the additional transmission means is one of a circumferentially elongated element, a transmission by gears or a transmission by a shaft. The first transmission means, the second transmission means, the additional transmission means enable to connect the driving roller on one shaft to a freely rotatable roller on the second shaft and optionally on the additional shaft. The driving roller is adapted to move the transmission means and this way the transmission means help to reel the cable.

In the embodiments, wherein the transmission means is a circumferentially elongated element such as e.g., a loop of a belt or a chain the transmission means may be tensioned by a tensioner. In some embodiments, wherein the driving rollers comprise sprockets, the circumferentially elongated element is arranged around the sprocket of the driving roller and around the freely rotatable rollers to enable the driving roller to move by the circumferentially elongated element the freely rotatable rollers.

The circumferentially elongated element is arranged around the rim parts of the driving roller and one or more freely rotatable rollers. The circumferentially elongated element is for example a chain or a belt. The circumferentially elongated element helps in reeling in and reeling out of the one or more cables easily and quickly.

According to an embodiment, the at least one circumferentially elongated element comprises a tensioner. The tensioner may be configured to apply tension to the circumferentially elongated element.

The tensioner is configured to apply tension to the circumferentially elongated element. The tensioner helps to maintain optimum tension to keep the circumferentially elongated element tensioned. The tensioner may be adjusted automatically or manually. In an embodiment, the cable feeding unit may comprise an automatic belt tension detector to detect required tension of the circumferentially elongated element. In another embodiment, the tension of the circumferentially elongated element may be checked by the crew member to find out whether the circumferentially elongated element needs to be tensioned or not.

The transmission by the gears or the transmission by the shaft enables to reduce the amount of energy lost through slippage, enables more precise and controllable torque transmission, enables to achieve longer durability in the embodiments wherein the cable feeding unit needs to operate for long periods of time without maintenance or repair or in the embodiments where maintenance is difficult or inconvenient. The transmission by the gears or the transmission by the shaft further enables to provide a wide range of speed ratios, allowing for precise control of the transmitted power, which is beneficial in the embodiments where the transmitted power needs to be adjusted over a wide range. The transmission by the gears or the transmission by the shaft is also suitable for applications where space is limited as it can be made in small sizes.

Optionally, the cable feeding unit may comprise controlling means. Controlling the one or more motors can be arranged by a remote control. Each of the motors may be configured to reel the cables at different speed depending on the length of the cable to be reeled into the vessel or out from the vessel. The cable feeding speed may be e.g., 5-30 meters per minute. The cable feeding speed may be slower when the cable is already in the vessel and last meters are needed to reel till the connection, the cable feeding speed may be faster when the cable is already reeled out the vessel and last meters are needed to reel the cable. The one or more motors may comprise an emergency stop. In an embodiment, the emergency stop may be implemented as an end position switch. Thus, optionally, the cable feeding unit comprises one or more end position switches. If cable is moving to one of the end positions at onshore direction or at vessel direction, the end position switch is arranged to stop the motor, e.g., by cutting-off voltage connection. This ensures that at onshore direction the cable is not reeled out from the cable feeding unit and at vessel direction there is too much cable in length not reeled out from the cable feeding unit.

The cable feeding unit is adapted to reel two or more cables. Especially advantageous of the cable feeding unit is that the cable feeding unit is extendable by adding in the cable feeding unit additional shafts with additional rollers and additional motors, extending in the cable feeding unit the length of the shaft and adding more rollers side by side on the shaft, combining the cable feeding units side by side, combining the cable feeding unit on top of each other. The extendibility of the present cable feeding unit provides more flexibility to provide more different cables to more different vessels or to serve several vessels at the same time simultaneously. E.g., arranging two cable feeding units according to the present disclosure side by side enable to reel 2-6 cables one by one or all together. E.g., arranging two cable feeding units according to the present disclosure on top of each other enable to reel 2-6 cables one by one or all together. Arranging more than two cable feeding units side by side or on top of each other or extending the number of rollers on the shaft or the number of shafts or the number of shafts and the number of rollers on the shafts in the cable feeding unit may enable to reel more than 6 cables one by one or all cables together. The cable feeding units arranged side by side may be placed completely side by side or offset on height plane to fit better. In such embodiments the motors can be rotated for better room usage.

Optionally, the one or more first freely rotatable rollers, the one or more second freely rotatable rollers and the one or more additional freely rotatable rollers are supported by bushing or bearing. Supporting the rollers by bushing or bearing enables to decrease rollers friction on the shaft.

The first shaft, the second shaft and the one or more additional shafts are supported from two or more points. The shaft may be supported at both shaft's ends, i.e., at the first end and at the second end. Alternatively, the shaft may be supported at the first end, at the second end and at one or more points between the first end of the shaft and second end of the shaft. The shaft supported from more than two points may be a multi-point supported shaft. When a shaft is subjected to bending or torsional loads, it will tend to deform, the deformation can lead to high stresses and potentially cause the shaft to fail. The advantage of the multi-point supported shaft is that it can resist bending and torsional loads more effectively than a shaft that is supported at points, i.e., at the first end and at the second end. If the shaft is supported at more than two points, the deformation will be distributed over a larger area, resulting in lower stresses and a greater ability to withstand the loads. Additionally, a multi-point supported shaft may be more rigid than a two-point supported shaft, thus reducing deflection, which is beneficial as it is important in the cable feeding unit to maintain the shaft's position and orientation under load.

Optionally, the cable feeding unit may comprise one or more control means, which may be a wired or a radio control means for operating the reeling in and reeling out operation. Remote diagnostics may be carried out via the remote diagnostics means over for example, 4G, over secure VPN.

In an example, 5 cables may be needed to be reeled into a cruise ships. For example, cruise vessels typically may require 5-6 cables to be reeled in, e.g., four power cables and one neutral cable or four power cables, one neutral cable and one signal cable. Typical cruise vessel is using shore power either 6,6 or 11kV systems with apparent power of 16-20 MVA. As different types of cables have different diameters then the cable tensioners and the motors of the present cable feeding units enable to reel all the cables at the same time by adjusting the reeling speed of the motors accordingly.

In another example, smaller vessels, container ships or similar, with less power requirement require 1-4 cables for example. For example, RoRo (Roll on, Roll Off) vessels require one High Voltage (HV) cable, container ships require 2 HV cables, low voltage vessels require 1 to 5 Low Voltage (LV) cables. Such vessels may be located at the port at the same time and thus may need the cables to be reeled into the vessels at the same time. According to the known solutions, such situation requires multiple cable management systems to provide cables to all the vessels at the port or if there is one CMS then it is possible to serve the vessels one by one and if one vessel has occupied the CMS other vessels have to wait their turn. Multiple vessels at the port at the same time are typically in different locations thus the required length of the cables to be reeled into the vessels is for each vessel different. The present cable feeding unit thus enables to reel the cables to the different vessels at the same time by adjusting the reeling speed of the motors according to the length of the cable to be reeled into the vessel and the time how quickly the cable needs to be reeled in and out the vessel and regulating the cable tensioners according to the diameter of the cable.

Thus, depending on the number of the cables, type of the cables, length of the cables and weight of the cables which are needed to be reeled to the ships at the port, the present cable feeding unit may comprise different sets of shafts, rollers and motors.

In an embodiment of reeling 3 cables the cable feeding unit comprising three motors, three shafts and three sets of rollers enables to reel three cables all together or separately. Such embodiment bears heavier loads. Thus, the advantage of such embodiment is that it enables to reel heavier cables or lighter cables but longer meters as there are three rollers in contact with the cable.

In the embodiment the first motor is adapted to drive the first shaft. The first shaft is connected to the first driving roller on the first shaft by the first torque transmission joint and thereby adapted to drive the first driving roller.

The first driving roller is connected by the first transmission means, e.g., by the first circumferentially elongated element to the first freely rotatable roller of the second set of rollers and the first freely rotatable roller of the additional set of rollers.

As a result, when the first motor works, the first motor is arranged to rotate the first shaft with the first driving roller, the first freely rotatable roller of the second set of rollers and the first freely rotatable roller of the additional set of rollers. This ensures that one cable is moved with three rollers and that all cables can be moved separately.

The first freely rotatable roller of the first set of rollers, the second freely rotatable roller of the first set of rollers, the second driving roller of the second set of rollers, the second freely rotatable roller of the second set of rollers, the second freely rotatable roller of the additional set of rollers and the additional driving roller of the additional set of rollers are still if the second motor and the third motor are still.

The first freely rotatable roller of the first set of rollers, the second freely rotatable roller of the first set of rollers have sliding bearings on top of the first shaft, therefore the first freely rotatable roller of the first set of rollers and the second freely rotatable roller of the first set of rollers are free to rotate when input from the second motor and third motor is applied or when the first motor is rotating and the first freely rotatable roller of the first set of rollers and the second freely rotatable roller of the first set of rollers need to be still.

The second motor and the additional motor are configured similarly, i.e., the second motor and the additional motor can be arranged to work and rotate the corresponding shafts with rollers independently of each other, in separate operating modes or in synchronized operating modes.

### DETAILED DESCRIPTION OF THE DRAWINGS

Referring to figure FIG. 1 there is shown an embodiment of a cable feeding unit according to the present disclosure, wherein the cable feeding unit **100** is installed to a shore cable management system **190.**

The cable feeding unit **100** is adapted to reel three cables **101a, 101b, 101c** together or separately.

Referring to figure FIG. 1a there is shown an enlarged view of the cable feeding unit **100** of the shore cable management system **190** as shown figure FIG. 1. According to the embodiment for reeling up to three cables **101a, 101b, 101c** together or separately the cable feeding unit **100** comprises a first motor **110,** a first shaft **112,** and a first set of rollers comprising three rollers **114;** a second motor **120,** a second shaft **122,** and a second set of rollers comprising three rollers **124;** one additional motor **140,** an additional shaft **142,** and additional set of rollers comprising three rollers **144.**

In the embodiment the axis of the first shaft **112,** the axis of the second shaft **122** and the axis of the additional shaft **142** are arranged in parallel on the same plane. The first shaft **112,** the second shaft **122** and the additional shaft **142** are all supported from two points, i.e., from a first end of the shaft and from the second end of the shaft.

The first motor **110** is connected with the first shaft **112,** the first set of rollers is arranged on the first shaft **112** and the first motor **110** is adapted to drive, by the first shaft **112,** the three rollers of the first set of rollers. The second motor **120** is connected with the second shaft **122,** the second set of rollers is arranged on the second shaft **122** and the second motor **120** is adapted to drive the three rollers of the second set of rollers. The additional motor **140** is connected with the additional shaft **142,** the additional set of rollers are arranged on the additional shaft **142** and the additional motor **140** is adapted to drive the three rollers of the additional set of rollers.

Referring to figure FIG. 1b there is shown a perspective view of the embodiment of the cable feeding unit **100** shown in figures FIG. 1 and FIG. 1a. The cable feeding unit **100** further comprises a set of cable tensioners **130** having cable tensioning rollers **132** placed opposite to the first set of rollers, the second set of rollers and the additional set of rollers so that rim parts of the cable tensioning rollers **132** facing rim parts of the rollers of the first set of rollers, rim parts of the rollers of the second set of rollers, and rim parts of the rollers of the additional set of rollers, thus forming a cable feeding passage.

Referring to figure FIG. 1c there is shown a bottom view of the embodiment of the cable feeding unit shown **100** shown in figures FIG. 1 and FIG. 1a. The first set of rollers comprises a first driving roller **115** and two freely rotatable rollers **116a** and **116b,** wherein the first driving roller **115** is connected to the first shaft **112** by a first torque transmission joint **117.** The second set of rollers comprises a second driving roller **125** and second freely rotatable rollers **126a** and **126b,** wherein the second driving roller **125** is connected to the second shaft **122** by a second torque transmission joint.

The additional set of rollers comprises an additional driving roller **145** and two additional freely rotatable rollers **146,** wherein the additional driving roller **145** is connected to the additional shaft **142** by an additional torque transmission joint. The first driving roller **115** is connected by a first transmission means **160** with one of a second freely rotatable rollers **126a** and with one of the additional freely rotatable rollers **146a.** The second driving roller **125** is connected by a second transmission means **161** with one of the first freely rotatable rollers **116a** and with one of the additional freely rotatable rollers **146b.** The additional driving roller **145** is connected by an additional transmission means **162** with second of the first freely rotatable rollers **116b** and with second of the second freely rotatable rollers **126b.**

The first transmission means **160,** the second transmission means **161** and the additional transmission means **162** are correspondingly a first circumferentially elongated element **160,** a second circumferentially elongated element **161,** and an additional circumferentially elongated element **162.**

Referring to figure FIG. 1d there is shown a side view of the embodiment of the cable feeding unit **100** shown in figures FIG. 1 and FIG. 1a. In the embodiment, a roller of the first set of rollers is a first driving roller **115,** wherein the first driving roller comprises a first sprocket **118.** The cable feeding unit **100** further comprises a first torque transmission joint **117,** which is a first key connection. The first driving roller **115** comprising the first sprocket **118** is connected to the first shaft **112** by the first torque transmission joint **117,** i.e., by the first key connection.

In the side view of the embodiment the cable feeding unit **100** further comprises a first transmission means **160,** which is a circumferentially elongated element such as a belt or a chain. The first transmission means **160,** i.e., the circumferentially elongated element is arranged around the first sprocket **118** of the first driving roller **115** arranged on the first shaft **112,** a first roller of the second set of rollers arranged on the second shaft **122** and a first roller of the additional set of rollers arranged on the additional shaft **142.** According to the embodiment the circumferentially elongated element is tensioned by tensioners **152.**

The side view of the embodiment of the cable feeding unit **100** further shows three cable tensioning rollers **132,** which comprise constant pressure means **134.**

The second driving roller comprises a second sprocket connected to the second shaft by the second torque transmission joint, i.e., by the second key connection. The additional driving roller comprises a third sprocket connected to the additional shaft by the additional torque transmission joint, i.e., by the third key connection.

The embodiment of the cable feeding unit comprising three motors, three shafts and three sets of rollers enables to reel three cables all together or separately. Such embodiment bears heavier loads. Thus, the advantage of the such embodiment is that it enables to reel heavier cables or lighter cables but longer meters as there are three rollers in contact with the cable.

Referring to figure FIG. 1e there is shown a schematic illustration of the two cable feeding units **100** shown in figures FIG. 1b, FIG. 1c, FIG. 1d, which can be used side by side in the shore cable management system for reeling 2-6 cables, wherein the two cable feeding units **100a, 100b** can be completely side by side or offset on height plane to fit better. Referring to figure FIG. 1f there is shown a schematic illustration of the two cable feeding units **100** shown in figures FIG. 1b, FIG. 1c, FIG. 1d wherein the two cable feeding units **100a, 100b** can be used on top of each other in the shore cable management system for reeling 2-6 cables.

Referring to figure FIG. 2 there is shown a bottom view of an alternative embodiment of the cable feeding unit **200** according to the present disclosure, wherein the cable feeding unit **200** is adapted to reel two cables together or separately. According to the embodiment for reeling up to two cables **201a, 201b,** together or separately the cable feeding unit **200** comprises a first motor **210,** a first shaft **212,** and a first set of rollers comprising a first driving roller **215** and a first freely rotatable roller **216;** a second motor **220,** a second shaft **222,** and a second set of rollers comprising a second driving roller **225** and a second freely rotatable roller **226,** wherein the first driving roller **215** is connected to the first shaft **212** by a first torque transmission joint and the second driving roller **225** is connected to the second shaft **222** by a second torque transmission joint.

In the embodiment the axis of the first shaft **212** and the axis of the second shaft **222** are arranged in parallel on the same plane. The first shaft **212** and the second shaft **222** are each supported from two points, i.e., from a first end of the shaft and from the second end of the shaft.

The first motor **210** is connected with the first shaft **212,** the first set of rollers is arranged on the first shaft **212** and the first motor **210** is adapted to drive, by the first shaft **212,** the first driving roller **215** of the first set of rollers. The second motor **220** is connected with the second shaft **222,** the second set of rollers is arranged on the second shaft **222** and the second motor **220** is adapted to drive the second driving roller **225** of the second set of rollers.

The cable feeding unit **200** further comprises a set of cable tensioners **230** having cable tensioning rollers placed opposite to the first set of rollers and the second set of rollers so that rim parts of the cable tensioning rollers facing rim parts of rollers of the first set of rollers and rollers of the second set of rollers, for forming a cable feeding passage for the cables **201a, 201b.**

The first driving roller **215** on the first shaft **212** is connected by a first transmission means **260** with the second freely rotatable roller **226** on the second shaft **222.** The second driving roller **225** on the second shaft **212** is connected by a second transmission means **261** with the first freely rotatable roller **216** on the first shaft **212.**

Referring to figure FIG. 4 there is shown a bottom view of an alternative embodiment of the cable feeding unit **300** according to the present disclosure, wherein the cable feeding unit **300** is adapted to reel up to three cables **301a, 301b, 301c** together or separately.

According to the embodiment for reeling up to three cables **301a, 301b, 301c** together or separately the cable feeding unit **300** comprises a first motor **310,** a first shaft **312,** and a first set of rollers; a second motor **320,** a second shaft **322,** and a second set of rollers; an additional motor **340,** an additional shaft **342,** and additional set of rollers.

In the embodiment the axis of the first shaft **312,** the axis of the second shaft **322** and the axis of the additional shaft **342** are arranged in parallel on the same plane. The first shaft **312,** the second shaft **322** and the additional shaft **342** are all supported from two points, i.e., from a first end of the shaft and from the second end of the shaft.

The first motor **310** is connected with the first shaft **312,** the first set of rollers is arranged on the first shaft **312** and the first motor **310** is adapted to drive, by the first shaft **312,** the first driving roller **315.** The second motor **320** is connected with the second shaft **322,** the second set of rollers is arranged on the second shaft **322** and the second motor **320** is adapted to drive the second driving roller **325.** The additional motor **340** is connected with the additional shaft **342,** the additional set of rollers are arranged on the additional shaft **342** and the additional motor **340** is adapted to drive the additional driving roller **345.**

The cable feeding unit **300** further comprises a set of cable tensioners **330** having cable tensioning rollers placed opposite to the first set of rollers, the second set of rollers and the additional set of rollers so that rim parts of the cable tensioning rollers facing rim parts of the rollers of the first set of rollers, rim parts of the rollers of the second set of rollers, and rim parts of the rollers of the additional set of rollers, thus forming a cable feeding passage.

The first set of rollers comprises a first driving roller **315,** wherein the first driving roller **315** is connected to the first shaft **312** by a first torque transmission joint. The second set of rollers comprises a second driving roller **325** and two freely rotatable rollers **326a** and **326b,** wherein the second driving roller **325** is connected to the second shaft **322** by a second torque transmission joint. The additional set of rollers comprises an additional driving roller **345** and an additional freely rotatable roller **346,** wherein the additional driving roller **345** is connected to the additional shaft **342** by an additional torque transmission joint. The first driving roller **315** is connected by a first transmission means **360** with one of a second freely rotatable rollers **326a.** The second driving roller **325** is connected by a second transmission means **361** with the additional freely rotatable rollers **346.** The additional driving roller **345** is connected by an additional transmission means **362** with second freely rotatable rollers **326b.**

The first transmission means **360,** the second transmission means **361** and the additional transmission means **362** are correspondingly a first circumferentially elongated element **360,** a second circumferentially elongated element **361,** and an additional circumferentially elongated element **362.**

## Claims

1. A cable feeding unit (100, 200, 300) for a shore cable management system (190), wherein the cable feeding unit (100, 200, 300) comprises a first motor (110, 210, 310), a first shaft (112, 212, 312), and a first set of rollers;
a second motor (120, 220, 320), a second shaft (122, 222, 322), and a second set of rollers, wherein an axis of the second shaft (122, 222, 322) is in parallel with an axis of the first shaft (112, 212, 312);
a cable feeding passage formed of a set of cable tensioners (130, 230, 330) having cable tensioning rollers (132) placed opposite to the first set of rollers (114, 214, 314) and the second set of rollers so that rim parts of the cable tensioning rollers (132) facing rim parts of the rollers of the first set of rollers (114, 214, 314) and the rollers of the second set of rollers, wherein
the first motor (110, 210, 310) is connected with the first shaft (112, 212, 312), the first set of rollers (114, 214, 314) is arranged on the first shaft (112, 212, 312) and the first motor (110, 210, 310) is adapted to drive, by the first shaft (112, 212, 312), one or more rollers of the first set of rollers (114, 214, 314);
the second motor (120, 220, 320) is connected with the second shaft (122, 222, 322), the second set of rollers is arranged on the second shaft (122, 222, 322) and the second motor (120, 220, 320) is adapted to drive one or more rollers of the second set of rollers;
at least one roller of the first set of rollers (114, 214, 314) is connected by a first transmission means (160, 260, 360) with a roller of the at least second set of rollers.

2. The cable feeding unit according to claim 1, wherein the cable feeding unit further comprises one or more additional motors (140, 340), one or more additional shafts (142, 342), and one or more sets of additional rollers (144, 344), wherein the one or more additional motors (140, 340) is connected with the one or more additional shafts (142, 342), the one or more sets of additional rollers (144, 344) are arranged on the one or more additional shafts (142, 342), wherein axes of the one or more additional shafts (143, 343) are in parallel with the axis of the first shaft (112, 312) and axis of the second shaft (122, 322).

3. The cable feeding unit according to claim 1 or 2, wherein the first set of rollers (114, 214, 314) comprises a first driving roller (115, 215, 315), or a first driving roller (115, 215) and one or more first freely rotatable rollers (116, 216), wherein the first driving roller (115, 215) is connected to the first shaft (112, 212) by a first torque transmission joint (117).

4. The cable feeding unit according to any of the preceding claim, wherein the second set of rollers comprises one or more second driving rollers (125, 225, 325) and one or more second freely rotatable rollers (126, 226, 326), wherein the second driving roller (125) is connected to the second shaft (122) by a second torque transmission joint.

5. The cable feeding unit according to any of the preceding claim, wherein the one or more sets of additional rollers (144, 344) comprises one or more additional driving rollers (145, 345) and one or more additional freely rotatable rollers (146, 346), wherein the one or more additional driving rollers (145, 345) are connected to the one or more additional shafts (142, 342) by a one or more additional torque transmission joint.

6. The cable feeding unit according to any of the preceding claim, wherein the cable feeding unit comprises a cable adjustment means.

7. The cable feeding unit according to any of the preceding claim, wherein the cable tensioning rollers (132) comprise constant pressure means (134).

8. The cable feeding unit according to any of the preceding claim, wherein the axis of the first shaft (112, 212, 312), the axis of the second shaft (122, 222, 322) and the axes of the one or more additional shafts (143, 343) are on the same plane or on the different planes.

9. The cable feeding unit according to any of the preceding claim, wherein the first torque transmission joint (117), the second torque transmission joint and the one or more additional torque transmission joints are selected from the group comprising a key connection, a shaft collar connection, a locknut, a clamping bush, a shrink disc, a taper bush, and a tooth joint.

10. The cable feeding unit according to any of the preceding claim, wherein the first transmission means (160, 260, 360), the second transmission means (161, 261, 361), the additional transmission means (162, 362) is one of a circumferentially elongated element, a transmission by gears or a transmission by a shaft.

11. The cable feeding unit according to any of the preceding claim, wherein the cable feeding unit comprises one or more end position switches.

12. The cable feeding unit according to any of the preceding claim, wherein the cable feeding unit is adapted to reel two or more cables.

13. The cable feeding unit according to any of the preceding claim, wherein the one or more first freely rotatable rollers (116, 216), the one or more second freely rotatable rollers (126, 226, 326) and the one or more additional freely rotatable rollers (146, 346) are supported by bushing or bearing.

14. The cable feeding unit according to any of the preceding claim, wherein the first shaft (112, 212, 312), the second shaft (122, 222, 322) and the one or more additional shafts (142, 342) are supported from two or more points.

## Patentansprüche

1. Kabelzuführungseinheit (100, 200, 300) für ein Landkabelmanagementsystem (190), wobei die Kabelzuführungseinheit (100, 200, 300) umfasst:
einen ersten Motor (110, 210, 310), eine erste Welle (112, 212, 312) und einen ersten Rollensatz;
einen zweiten Motor (120, 220, 320), eine zweite Welle (122, 222, 322) und einen zweiten Rollensatz, wobei eine Achse der zweiten Welle (122, 222, 322) parallel zu einer Achse der ersten Welle (112, 212, 312) ist;
einen Kabelzuführungskanal, der aus einem Kabelspannersatz (130, 230, 330), der Kabelspannrollen (132) aufweist, die gegenüber dem ersten Rollensatz (114, 214, 314) und dem zweiten Rollensatz platziert sind, sodass die Randteile der Kabelspannrollen (132) den Randteilen der Rollen des ersten Rollensatzes (114, 214, 314) und der Rollen des zweiten Rollensatzes zugewandt sind, wobei
der erste Motor (110, 210, 310) mit der ersten Welle (112, 212, 312) verbunden ist, der erste Rollensatz (114, 214, 314) auf der ersten Welle (112, 212, 312) angeordnet ist und der erste Motor (110, 210, 310) geeignet ist, um durch die erste Welle (112, 212, 312) eine oder mehrere Rollen des ersten Rollensatzes (114, 214, 314) anzutreiben;
der zweite Motor (120, 220, 320) mit der zweiten Welle (122, 222, 322) verbunden ist, der zweite Rollensatz auf der zweiten Welle (122, 222, 322) angeordnet ist und der zweite Motor (120, 220, 320) geeignet ist, um eine oder mehrere Rollen des zweiten Rollensatzes anzutreiben;
mindestens eine Rolle des ersten Rollensatzes (114, 214, 314) durch ein erstes Übertragungsmittel (160, 260, 360) mit einer Rolle des mindestens zweiten Rollensatzes verbunden ist.

2. Kabelzuführungseinheit nach Anspruch 1, wobei die Kabelzuführungseinheit ferner einen oder mehrere zusätzliche Motoren (140, 340), eine oder mehrere zusätzliche Wellen (142, 342) und einen oder mehrere zusätzliche Rollensätze (144, 344) umfasst, wobei der eine oder die mehreren zusätzlichen Motoren (140, 340) mit der einen oder den mehreren zusätzlichen Wellen (142, 342) verbunden sind, der eine oder die mehreren zusätzlichen Rollensätze (144, 344) auf der einen oder den mehreren zusätzlichen Wellen (142, 342) angeordnet sind, wobei die Achsen der einen oder der mehreren zusätzlichen Wellen (143, 343) parallel zu der Achse der ersten Welle (112, 312) und zu der Achse der zweiten Welle (122, 322) sind.

3. Kabelzuführungseinheit nach Anspruch 1 oder 2, wobei der erste Rollensatz (114, 214, 314) eine erste Antriebsrolle (115, 215, 315) oder eine erste Antriebsrolle (115, 215) und eine oder mehrere erste frei drehbare Rollen (116, 216) umfasst, wobei die erste Antriebsrolle (115, 215) mit der ersten Welle (112, 212) durch ein erstes Drehmomentübertragungsgelenk (117) verbunden ist.

4. Kabelzuführungseinheit nach einem der vorstehenden Ansprüche, wobei der zweite Rollensatz eine oder mehrere zweite Antriebsrollen (125, 225, 325) und eine oder mehrere zweite frei drehbare Rollen (126, 226, 326) umfasst, wobei die zweite Antriebsrolle (125) mit der zweiten Welle (122) durch ein zweites Drehmomentübertragungsgelenk verbunden ist.

5. Kabelzuführungseinheit nach einem der vorstehenden Ansprüche, wobei der eine oder die mehreren zusätzlichen Rollensätze (144, 344) eine oder mehrere zusätzliche Antriebsrollen (145, 345) und eine oder mehrere zusätzliche frei drehbare Rollen (146, 346) umfassen, wobei die eine oder die mehreren zusätzlichen Antriebsrollen (145, 345) mit der einen oder den mehreren zusätzlichen Wellen (142, 342) durch ein oder mehrere zusätzliche Drehmomentübertragungsgelenke verbunden sind.

6. Kabelzuführungseinheit nach einem der vorstehenden Ansprüche, wobei die Kabelzuführungseinheit ein Kabeleinstellmittel umfasst.

7. Kabelzuführungseinheit nach einem der vorstehenden Ansprüche, wobei die Kabelspannrollen (132) Konstantdruckmittel (134) umfassen.

8. Kabelzuführungseinheit nach einem der vorstehenden Ansprüche, wobei die Achse der ersten Welle (112, 212, 312), die Achse der zweiten Welle (122, 222, 322) und die Achsen der einen oder der mehreren zusätzlichen Wellen (143, 343) auf derselben Ebene oder auf unterschiedlichen Ebenen liegen.

9. Kabelzuführungseinheit nach einem der vorstehenden Ansprüche, wobei das erste Drehmomentübertragungsgelenk (117), das zweite Drehmomentübertragungsgelenk und das eine oder die mehreren zusätzlichen Drehmomentübertragungsgelenke aus der Gruppe ausgewählt sind, umfassend eine Passfederverbindung, eine Wellenbundverbindung, eine Kontermutter, eine Klemmbuchse, eine Schrumpfscheibe, eine Kegelbuchse und eine Zahnverbindung.

10. Kabelzuführungseinheit nach einem der vorstehenden Ansprüche, wobei das erste Übertragungsmittel (160, 260, 360), das zweite Übertragungsmittel (161, 261, 361) und das zusätzliche Übertragungsmittel (162, 362) eines von einem in Umfangsrichtung verlängerten Element, einer Getriebeübertragung oder einer Wellenübertragung ist.

11. Kabelzuführungseinheit nach einem der vorstehenden Ansprüche, wobei die Kabelzuführungseinheit einen oder mehrere Endpositionsschalter umfasst.

12. Kabelzuführungseinheit nach einem der vorstehenden Ansprüche, wobei die Kabelzuführungseinheit geeignet ist, um zwei oder mehr Kabel aufzurollen.

13. Kabelzuführungseinheit nach einem der vorstehenden Ansprüche, wobei die eine oder die mehreren ersten frei drehbaren Rollen (116, 216), die eine oder die mehreren zweiten frei drehbaren Rollen (126, 226, 326) und die eine oder die mehreren zusätzlichen frei drehbaren Rollen (146, 346) durch Buchsen oder Lager gestützt werden.

14. Kabelzuführungseinheit nach einem der vorstehenden Ansprüche, wobei die erste Welle (112, 212, 312), die zweite Welle (122, 222, 322) und die eine oder die mehreren zusätzlichen Wellen (142, 342) von zwei oder mehreren Punkten gestützt werden.

## Revendications

1. Unité d'alimentation de câbles (100, 200, 300) destinée à un système de gestion de câbles de rivage (190), dans laquelle l'unité d'alimentation de câbles (100, 200, 300) comprend
un premier moteur (110, 210, 310), un premier arbre (112, 212, 312) et un premier ensemble de galets ;
un second moteur (120, 220, 320), un second arbre (122, 222, 322), et un second ensemble de galets, dans laquelle un axe du second arbre (122, 222, 322) est en parallèle avec un axe du premier arbre (112, 212, 312) ;
un passage d'alimentation de câble formé d'un ensemble de tendeurs de câble (130, 230, 330) ayant des galets tendeurs de câble (132) placés opposés au premier ensemble de galets (114, 214, 314) et au second ensemble de galets de sorte que des parties de joue des galets tendeurs de câble (132) font face à des parties de joue des galets du premier ensemble de galets (114, 214, 314) et des galets du second ensemble de galets, dans laquelle
le premier moteur (110, 210, 310) est relié au premier arbre (112, 212, 312), le premier ensemble de galets (114, 214, 314) est agencé sur le premier arbre (112, 212, 312) et le premier moteur (110, 210, 310) est conçu pour entraîner, par le premier arbre (112, 212, 312), un ou plusieurs galets du premier ensemble de galets (114, 214, 314) ;
le second moteur (120, 220, 320) est relié au second arbre (122, 222, 322), le second ensemble de galets est agencé sur le second arbre (122, 222, 322) et le second moteur (120, 220, 320) est conçu pour entraîner un ou plusieurs galets du second ensemble de galets ;
au moins un galet du premier ensemble de galets (114, 214, 314) est relié par un premier moyen de transmission (160, 260, 360) à un galet de l'au moins un second ensemble de galets.

2. Unité d'alimentation de câbles selon la revendication 1, dans laquelle l'unité d'alimentation de câbles comprend en outre un ou plusieurs moteurs supplémentaires (140, 340), un ou plusieurs arbres supplémentaires (142, 342), et un ou plusieurs ensembles de galets supplémentaires (144, 344), dans laquelle le ou les moteurs supplémentaires (140, 340) sont reliés au ou aux arbres supplémentaires (142, 342), le ou les ensembles de galets supplémentaires (144, 344) sont agencés sur le ou les arbres supplémentaires (142, 342), dans laquelle des axes du ou des arbres supplémentaires (143, 343) sont en parallèle avec l'axe du premier arbre (112, 312) et l'axe du second arbre (122, 322).

3. Unité d'alimentation de câbles selon la revendication 1 ou 2, dans laquelle le premier ensemble de galets (114, 214, 314) comprend un premier galet d'entraînement (115, 215, 315), ou un premier galet d'entraînement (115, 215) et un ou plusieurs premiers galets à rotation libre (116, 216), dans laquelle le premier galet d'entraînement (115, 215) est relié au premier arbre (112, 212) par un premier raccord de transmission de couple (117).

4. Unité d'alimentation de câbles selon l'une quelconque des revendications précédentes, dans laquelle le second ensemble de galets comprend un ou plusieurs seconds galets d'entraînement (125, 225, 325) et un ou plusieurs seconds galets à rotation libre (126, 226, 326), dans laquelle le second galet d'entraînement (125) est relié au second arbre (122) par un second raccord de transmission de couple.

5. Unité d'alimentation de câbles selon l'une quelconque des revendications précédentes, dans laquelle le ou les ensembles de galets supplémentaires (144, 344) comprennent un ou plusieurs galets d'entraînement supplémentaires (145, 345) et un ou plusieurs galets à rotation libre supplémentaires (146, 346), dans laquelle le ou les galets d'entraînement supplémentaires (145, 345) sont reliés au ou aux arbres supplémentaires (142, 342) par un ou plusieurs raccords de transmission de couple supplémentaires.

6. Unité d'alimentation de câbles selon l'une quelconque des revendications précédentes, dans laquelle l'unité d'alimentation de câbles comprend un moyen d'ajustement de câble.

7. Unité d'alimentation de câbles selon l'une quelconque des revendications précédentes, dans laquelle les galets tendeurs de câble (132) comprennent un moyen de pression constante (134).

8. Unité d'alimentation de câbles selon l'une quelconque des revendications précédentes, dans laquelle l'axe du premier arbre (112, 212, 312), l'axe du second arbre (122, 222, 322) et les axes du ou des arbres supplémentaires (143, 343) sont sur le même plan ou sur les plans différents.

9. Unité d'alimentation de câbles selon l'une quelconque des revendications précédentes, dans laquelle le premier raccord de transmission de couple (117), le second raccord de transmission de couple et le ou les raccords de transmission de couple supplémentaires sont choisis dans le groupe comprenant une liaison à clavette, une liaison à collier d'arbre, un contre-écrou, une douille de serrage, un disque de freinage, une douille conique et un raccord à denture.

10. Unité d'alimentation de câbles selon l'une quelconque des revendications précédentes, dans laquelle le premier moyen de transmission (160, 260, 360), le second moyen de transmission (161, 261, 361), le moyen de transmission supplémentaire (162, 362) est l'un parmi un élément allongé circonférentiellement, une transmission par engrenages ou une transmission par arbre.

11. Unité d'alimentation de câbles selon l'une quelconque des revendications précédentes, dans laquelle l'unité d'alimentation de câbles comprend un ou plusieurs interrupteurs de position finale.

12. Unité d'alimentation de câbles selon l'une quelconque des revendications précédentes, dans laquelle l'unité d'alimentation de câbles est conçue pour enrouler deux câbles ou plus.

13. Unité d'alimentation de câbles selon l'une quelconque des revendications précédentes, dans laquelle le ou les premiers galets à rotation libre (116, 216), le ou les seconds galets à rotation libre (126, 226, 326) et le ou les galets à rotation libre supplémentaires (146, 346) sont supportés par une douille ou un palier.

14. Unité d'alimentation de câbles selon l'une quelconque des revendications précédentes, dans laquelle le premier arbre (112, 212, 312), le second arbre (122, 222, 322) et le ou les arbres supplémentaires (142, 342) sont supportés à partir de deux points ou plus.
